Europäisches Patentamt

European Patent Office

Office européen des brevets

(11) Veröffentlichungsnummer: **0 511 630 A2**

# EUROPÄISCHE PATENTANMELDUNG

(21) Anmeldenummer: **92107212.0**

(22) Anmeldetag: **28.04.92**

(51) Int. Cl.⁵: **F16D 13/64**

(30) Priorität: **30.04.91 DE 4114100**

(43) Veröffentlichungstag der Anmeldung:
**04.11.92 Patentblatt 92/45**

(84) Benannte Vertragsstaaten:
**DE ES FR GB**

(71) Anmelder: **Fichtel & Sachs AG**
**Ernst-Sachs-Strasse 62**
**W-8720 Schweinfurt(DE)**

(72) Erfinder: **Jeppe, Harald**
**Schwanbergstrasse 20**
**W-8720 Schweinfurt(DE)**
Erfinder: **Zottmann, Michael**
**Ziegelhütte 4**
**W-8722 Sennfeld(DE)**

(72) Erfinder: **Neumann, Klaus**
**Kautzenstrasse 27**
**W-8721 Niederwerrn(DE)**
Erfinder: **Stürmer, Winfried**
**An den Schwalgen 29**
**W-8721 Euerbach(DE)**
Erfinder: **Wiedmann, Rainer**
**Beethovenstrasse 1**
**W-8721 Niederwerrn(DE)**

(74) Vertreter: **Liska, Horst, Dr.-Ing. et al**
**Patentanwälte H. Weickmann,K. Fincke,F.A.**
**Weickmann, B. Huber,H. Liska,J. Prechtel,B.**
**Böhm, Kopernikusstrasse 9 Postfach 86 08**
**20**
**W-8000 München 86(DE)**

(54) **Kraftfahrzeug-Reibungskupplung.**

(57) Es wird eine Kraftfahrzeug-Reibungskupplung vorgeschlagen, deren Kupplungsscheibe (17) von einer Belagfederung (29) axial abgefederte Reibbeläge (23) hat. Der Federweg der Belagfederung (29) läßt über die maximale Anpreßkraft der Kupplungsfeder (7) hinaus einen Restfederweg zu, der vorzugsweise erst bei etwa dem 1,5fachen Wert der maximalen Anpreßkraft der Kupplungsfeder (7) ausgeglichen ist. Der Restfederweg ermöglicht es, Geräusche zu eliminieren, die während des Anfahrvorgangs auftreten können.

Fig. 1

Die Erfindung betrifft eine Kraftfahrzeug-Reibungskupplung.

Herkömmliche Kraftfahrzeug-Reibungskupplungen umfassen in der Regel eine Kupplungsscheibe, deren Reibbeläge zwischen Reibflächen eines Schwungrads und einer Anpreßplatte angeordnet sind. Eine beispielsweise als Membranfeder ausgebildete Kupplungshauptfeder spannt die drehfest, aber axial beweglich an dem Schwungrad geführte Anpreßplatte über die Reibbeläge gegen das Schwungrad.

Aus der DE-A-31 45 054 ist es bekannt, zur Verbesserung des Anfahrkomforts die Reibbeläge axial federnd am Außenumfang einer Nabenscheibe der Kupplungsscheibe aufzuhängen, so daß sie während des Einkuppelvorgangs von der Kraft der Kupplungshauptfeder aufeinander zu bewegt werden. Bei der bekannten Reibungskupplung sind die Federeigenschaften der Belagfederung so bemessen, daß ihre Federwege im eingekuppelten Zustand der Kupplung vollständig aufgebraucht sind, so daß die Belagfedern mit ihren Rückseiten aneinander anliegen.

Obwohl diese Art der axial elastischen Aufhängung der Reibbeläge einen großen Anfahrkomfort gewährleistet, treten doch immer wieder während des Einkuppelvorgangs sowohl höherfrequente als auch niederfrequente Geräusche auf.

Es ist Aufgabe der Erfindung, eine Kraftfahrzeug-Reibungskupplung des vorstehend erläuterten Typs zu schaffen, bei welcher die während des Einkuppelvorgangs auftretenden Geräusche unterbunden sind.

Die Erfindung geht von einer Kraftfahrzeug-Reibungskupplung aus, die folgende Merkmale umfaßt:

Zwei um eine gemeinsame Drehachse drehbare, drehfest jedoch axial relativ zueinander beweglich aneinander geführte Kupplungselemente mit axial sich gegenüberliegenden Reibflächen, insbesondere in Form eines Schwungrads und einer Anpreßplatte,
eine relativ zu den Kupplungskomponenten drehbare und axial bewegliche Kupplungsscheibe mit einer zur Drehachse gleichachsigen Nabe, einem mit der Nabe verbundenen Scheibenteil und zwei zwischen den axial sich gegenüberliegenden Reibflächen der Kupplungskomponenten axial nebeneinander angeordneten, drehfest an dem Scheibenteil im Bereich von dessen Außenumfang gehaltenen Reibbelaganordnungen, von denen wenigstens eine Reibbelaganordnung mittels einer axial federnden Belagfedereinrichtung axial relativ zur jeweils anderen Reibbelaganordnung beweglich an dem Scheibenteil geführt ist und
eine die beiden Kupplungskomponenten zum Einspannen der Reibbeläge zwischen den Reibflächen der Kupplungskomponenten mit einer vorbestimmten maximalen Anpreßkraft axial aufeinander zu spannenden Kupplungshauptfedereinrichtung.

Gemäß der Erfindung ist vorgesehen, daß die Federeigenschaften der Belagfedereinrichtung und gegebenenfalls der Reibbelaganordnungen so bemessen sind, daß bei der vorbestimmten maximalen Anpreßkraft der Kupplungshauptfedereinrichtung ein Restfederweg verbleibt.

Die Erfindung geht von der Überlegung aus, daß die während der Rutschphase der Reibbeläge auftretenden Geräusche während des Einkuppelvorgangs durch Reibkraftschwankungen an den Reibflächen ausgelöst werden, die zu Taumelschwingungen sowohl des Schwungrads als auch der Anpreßplatte führen. Die Taumelschwingungen regen hierbei Geräuschabstrahlungen im hörbaren Bereich an. Durch geeignete Wahl der Federungscharakteristik der Belagfedereinrichtung und gegebenenfalls der Elastizitätseigenschaften der Reibbeläge wird der Federweg, den die Reibflächen der beiden Kupplungskomponenten relativ zueinander unter Beanspruchung der Belagfederung ausführen können, über das zum vollständigen Einrücken der Kupplung erforderliche Maß hinaus vergrößert. Die Reibbeläge der Kupplungsscheibe können dann bei eventuell auftretenden Taumelschwingungen des Schwungrads bzw. der Anpreßplatte gegen die Federkraft der Belagfederung nachgeben. Die vorstehend erläuterten Geräusche werden auf diese Weise unterdrückt.

Als günstiger Kompromiß zwischen konstruktivem Aufwand und erreichbarer Wirkung hat sich herausgestellt, daß in einem Kraftbereich zwischen der maximalen Anpreßkraft, wie sie durch die Federvorspannung der Kupplungsfeder gegeben ist, und ungefähr dem 1,5fachen Wert der maximalen Anpreßkraft noch ein Restfederweg von mindestens 0,04 mm vorliegen sollte. Insbesondere bei Reibungskupplungen von Personenkraftwagen wird damit erreicht, daß die Belagfedern bei etwa dem 1,5fachen Betrag der maximalen Anpreßkraft plan gedrückt sind. Der vergleichsweise geringe Restfederweg von mindestens 0,04 mm verhindert in der Regel die im Rutschbereich auftretenden Geräusche.

Im folgenden wird ein Ausführungsbeispiel der Erfindung anhand einer Zeichnung näher erläutert. Hierbei zeigt:

Fig. 1    einen teilweisen Axiallängsschnitt durch eine Membranfederkupplung eines Kraftfahrzeugs;

Fig. 2    eine Schnittansicht durch eine Belagfederung für die Kupplung nach Fig. 1 und

Fig. 3    eine entsprechend der Erfindung bemessene Federkennlinie der Belagfederung.

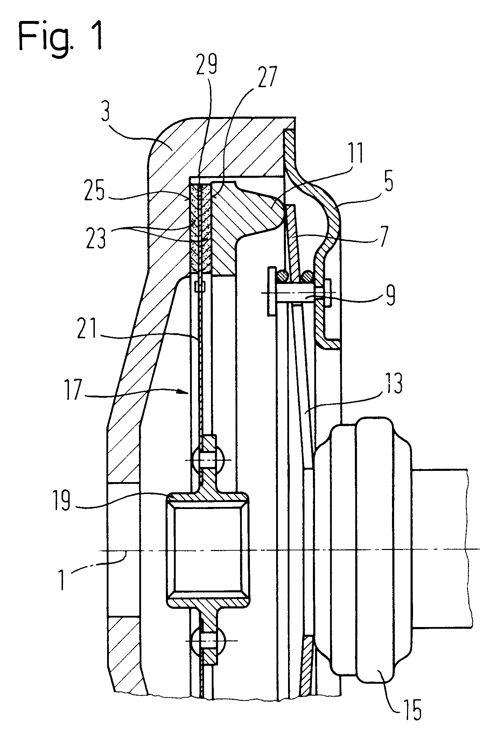

Fig. 1 zeigt schematisch eine Kraftfahrzeug-Reibungskupplung mit einem zu einer Drehachse 1 konzentrischen Schwungrad 3, das im Betrieb an einer nicht näher dargestellten Kurbelwelle einer Brennkraftmaschine aufgeschraubt ist. Das Schwungrad 3 trägt ein Kupplungsgehäuse 5, an dem in an sich bekannter Weise eine Membranfeder 7 über mehrere in Umfangsrichtung verteilt angeordnete Distanzbolzen 9 kippbar abgestützt ist. Die Membranfeder 7 wirkt mit ihrem radial äußeren Teil auf eine drehfest, aber axial verlagerbar an dem Kupplungsgehäuse 5 oder dem Schwungrad 3 geführte Anpreßplatte 11 ein und spannt diese axial federnd in Richtung auf das Schwungrad 3 vor. Die Membranfeder 7 hat nach radial innen abstehende Federzungen 13, die durch einen Kupplungsausrücker 15 zum Lüften bzw. Öffnen der Reibungskupplung in Richtung auf das Schwungrad 3 zu bewegt werden können, wodurch sich der Außenumfang der Membranfeder 7 von der Anpreßplatte 11 wegbewegt und diese entlastet. Gleichachsig zur Drehachse 1 ist eine Kupplungsscheibe 17 angeordnet, deren Nabe 19 drehfest, aber axial verschiebbar auf einer nicht näher dargestellten Getriebeeingangswelle sitzt. Die Kupplungsscheibe 17 weist eine Nabenscheibe 21 auf, die im Bereich ihres Außenumfangs auf axial beiden Seiten Reibbeläge 23 trägt. Die Reibbeläge 23 sitzen zwischen einander gegenüberliegenden Reibflächen 25 und 27 des Schwungrads 3 bzw. der Anpreßplatte 11 und sind über nachfolgend noch näher erläuterte Belagfedern 29 am Außenumfang der Nabenscheibe 21 befestigt.

Beim Anfahren des Kraftfahrzeugs oder beim Schalten des Getriebes wird die Kupplung mittels des Ausrückers 15 ausgerückt, so daß die Reibbeläge 23 der Kupplungsscheibe 17 ohne Reibkontakt mit dem Schwungrad 3 und der Anpreßplatte 11 sind. Beim Einkuppeln bewegt sich der radial äußere Bereich der Membranfeder 5 auf das Schwungrad 3 zu, und das von der Brennkraftmaschine erzeugte Drehmoment wird einerseits über das Schwungrad 3 und andererseits über die Anpreßplatte 11 auf die Reibbeläge 23 der Kupplungsscheibe 17 übertragen. Bis der vollständig eingekuppelte Zustand erreicht ist, entsteht eine gleitende Relativbewegung zwischen den Reibbelägen 23 und den Reibflächen 25, 27 des Schwungrads 3 bzw. der Anpreßplatte 11.

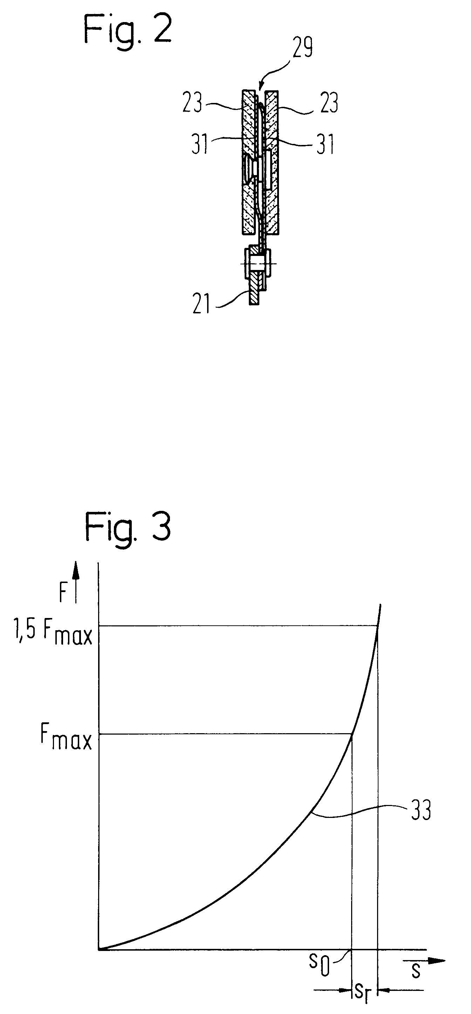

Fig. 2 zeigt ein Beispiel der Belagfederung 29. Diese umfaßt blattförmige Belagfedern 31, die mit der Nabenscheibe 21 einerseits und jeweils einem der beiden Reibbeläge 23 vernietet sind. Im unbelasteten Zustand haben die Belagfedern 31, wie Fig. 2 zeigt, einen vorbestimmten Abstand, der den maximalen Federweg der Belagfederung 29 definiert und während des Einkuppelvorgangs bis auf einen Restfederweg aufgebraucht wird, wenn die Reibbeläge 23 unter der Anpreßkraft der Membranfeder 7 aufeinander zu bewegt werden. Die Belagfederung erzeugt gegebenenfalls in Verbindung mit einem elastischen Kompressionsverhalten der Reibbeläge 23 eine Reaktionskraft, die der Anpreßkraft der Membranfeder 7 entgegenwirkt und ein vergleichsweise weiches Einrücken der Kupplung ermöglicht.

Fig. 3 zeigt mit einer Kennlinie 33 den Verlauf der Federkraft F der Belagfederung 29 in Abhängigkeit vom Federweg s. $F_{max}$ bezeichnet die maximale Anpreßkraft, mit der die Membranfeder 7 auf die Reibbeläge 23 wirkt, wenn die Kupplung entsprechend der vorbestimmten Vorspannung der Membranfeder 7 vollständig eingekuppelt ist. $s_0$ bezeichnet den Federweg, über den sich die Reibbeläge 23 (bzw. die Reibflächen 25, 27) aufeinander zu bewegen, während die Anpreßkraft F auf den Wert $F_{max}$ ansteigt. Die Belagfederung 29 ist so ausgebildet, daß die Belagfedern 31 bei Belastung mit $F_{max}$ noch nicht aneinander anliegen, sondern einen Restfederweg $s_r$ aufnehmen könnte, für den Fall, daß die Anpreßkraft über $F_{max}$ hinaus anwachsen würde. Der Restfederweg kann Taumelbewegungen der Reibflächen 25, 27 bzw. der Reibbeläge 23 während des Einkuppelvorgangs aufnehmen und verhindert die Anregung von zu Geräuschen führenden Schwingungen. Der durch die Belagfederung 29 bereitgestellte Restfederweg bzw. Überfederweg ist so bemessen, daß er bei einer Anpreßkraft mit dem 1,5fachen Wert von $F_{max}$ mindestens 0,04 mm beträgt. Bei einer Belastung mit $F_{max}$ ist, wie die Kennlinie in Fig. 3 zeigt, der Restfederweg entsprechend dem Verlauf der Kennlinie 33 größer.

Fig. 1 zeigt eine gedrückte Membranfederkupplung. Es versteht sich, daß das Prinzip der Erfindung auch bei gezogenen Membranfederkupplungen wie auch bei Kupplungen mit anderer Kupplungshauptfeder eingesetzt werden kann.

**Patentansprüche**

1. Kraftfahrzeug-Reibungskupplung, umfassend
   - zwei um eine gemeinsame Drehachse (1) drehbare, drehfest jedoch axial relativ zueinander bewegliche, aneinander geführte Kupplungskomponenten (3, 11) mit axial sich gegenüberliegenden Reibflächen (25, 27), insbesondere in Form eines Schwungrads (3) und einer Anpreßplatte (11),
   - eine relativ zu den Kupplungskomponenten (3, 11) drehbare und axial bewegliche Kupplungsscheibe (17) mit einer zur Drehachse (1) gleichachsigen Nabe (19), einem mit der Nabe (19) verbundenen Scheibenteil (21) und zwei zwischen den axial sich gegenüberliegenden Reibflächen (25, 27) der Kupplungskomponenten (3, 11) axial nebeneinander angeordneten, drehfest an dem Scheibenteil (21) im Bereich von dessen Außenumfang gehaltenen Reibbelaganordnungen (23), von denen wenigstens eine Reibbelaganordnung (23) mittels einer axial federnden Belagfedereinrichtung (29) axial relativ zur jeweils anderen Reibbelaganordnung (23) beweglich an dem Scheibenteil (21) geführt ist und

- eine die beiden Kupplungskomponenten (3, 11) zum Einspannen der Reibbeläge (23) zwischen den Reibflächen (25, 27) der Kupplungskomponenten (3, 11) mit einer vorbestimmten maximalen Anpreßkraft ($F_{max}$) axial aufeinander zu spannenden Kupplungshauptfedereinrichtung (7),

**dadurch gekennzeichnet,** daß die Federeigenschaften der Belagfedereinrichtung (29) und gegebenenfalls der Reibbelaganordnungen (23) so bemessen sind, daß bei der vorbestimmten maximalen Anpreßkraft ($F_{max}$) der Kupplungshauptfedereinrichtung (7) ein Restfederweg ($s_r$) verbleibt.

2. Reibungskupplung nach Anspruch 1, dadurch gekennzeichnet, daß der Restfederweg ($s_r$) mindestens 0,04 mm beträgt.

3. Reibungskupplung nach Anspruch 1 oder 2, dadurch gekennzeichnet, daß der Restfederweg ($s_r$) in einem Kraftbereich der Kupplungshauptfedereinrichtung (7) zwischen der vorbestimmten maximalen Anpreßkraft ($F_{max}$) und ungefähr dem 1,5fachen Betrag der vorbestimmten maximalen Anpreßkraft ($F_{max}$) vorhanden ist.

# Fig. 1

# Fig. 2

# Fig. 3